## Europäisches Patentamt
## European Patent Office
## Office européen des brevets

(19)

(11) Numéro de publication: **0 030 184**
**B1**

(12) # FASCICULE DE BREVET EUROPEEN

(45) Date de publication du fascicule du brevet: 02.11.83

(51) Int. Cl.³: **F 16 D 55/224**

(21) Numéro de dépôt: 80401664.0

(22) Date de dépôt: 20.11.80

(54) **Frein à disque**

(30) Priorité: 20.11.79 FR 7928583

(43) Date de publication de la demande:
10.06.81 Bulletin 81/23

(45) Mention de la délivrance du brevet:
02.11.83 Bulletin 83/44

(84) Etats contractants désignés:
DE GB IT

(56) Documents cités:
FR - A - 2 068 231
FR - A - 2 221 647
FR - A - 2 343 929
FR - A - 2 408 766
FR - A - 2 420 692
FR - E - 88 388

(73) Titulaire: SOCIETE ANONYME D.B.A.
Centre Paris Pleyel
F-93521 St-Denis Cédex 01 (FR)

(72) Inventeur: Annebicque, Daniel
2 Allée Louis Jouvet
F-92390 Villeneuve la Garenne (FR)
Inventeur: Gérard, Jean-Louis
129 Boulevard Masséna
F-75013 Paris (FR)

(74) Mandataire: Poidatz, Emmanuel, et al
Service Brevets Bendix
44 rue François 1er
F-75008 Paris (FR)

Courier Press, Leamington Spa, England.

## Frein à disque

L'invention a pour objet un frein à disque.

On connaît de nombreux types de frein à disque qui sont généralement classés en deux grandes catégories appelées respectivement frein à disque à étrier fixe et frein à disque à étrier coulissant. Les freins à disque à étrier fixe sont des freins à disque dans lesquels un organe support fixe est muni de moyens de commande opposés sollicitant deux organes de friction contre les faces respectives d'un disque tournant. Au contraire, les freins à disque à étrier coulissant sont des freins dans lesquels un étrier ou un cadre est monté coulissant par rapport à une partie fixe du véhicule et comporte des moyens de commande disposés d'un seul côté du disque, de telle sorte que ces moyens de commande sollicitent directement l'un des organes de friction contre la face correspondante du disque et, par réaction au travers de l'étrier, l'autre organe de friction contre la seconde face du disque. Dans ce dernier type de frein, les organes de friction peuvent être montés en coulissement sur la partie fixe du véhicule ou sur l'étrier ou le cadre coulissant alors que dans les freins à disque à étrier fixe, l'organe support de couple est nécessairement constitué par l'étrier fixe.

Dans l'un ou l'autre de ces types de frein, il est de pratique courante de ménager dans l'organe supportant le couple de freinage une ouverture radiale sensiblement rectangulaire permettant d'assurer le remplacement des organes de friction lorsque les garnitures de friction qui leur sont associées sont usées.

Parmi les différents moyens permettant d'assurer le montage et le démontage des organes de friction, il est connu de disposer une clavette de guidage entre au moins un des bords circonférentiels de l'ouverture ménagée dans l'organe support de couple et les organes de friction. Grâce à une telle disposition, le démontage de la clavette permet l'extraction des organes de friction. Le montage de la clavette de guidage est effectué par translation axiale de celle-ci après la mise en place des organes de friction.

Des moyens d'immobilisation en translation de la clavette par rapport à l'organe support de couple sont généralement prévus afin de maintenir la clavette dans sa position normale de fonctionnement; deux ressorts anti-bruit sont de plus généralement associés aux organes de friction et viennent prendre appui sur la clavette après son montage.

Une telle structure est proposée dans la demande de brevet FR—A—2 221 647 qui prévoit une clavette de verrouillage de l'étrier sur la support fixe équipée d'un ressort à la lame immobilisant axialement la clavette au moyen de pattes découpées dans le métal passant de part et d'autre de la clavette et venant en prise avec des extrémités opposées de bras formés dans le support fixe. Le ressort à lame plaquant d'une part la clavette sur le support fixe et d'autre part l'étrier sur la surface du support fixe destinée à recevoir le tirage en marche avant et circonférentiellement espacée de la partie du support fixe recevant la clavette. Les éléments de friction étant par ailleurs équipés de ressorts anti-bruit.

Cette solution parfaitement adaptée à la liaison entre étrier et support fixe où les surfaces en regard sont importantes et les chocs lors du freinage en marche arrière sont répartis sur ces surfaces importantes d'autant plus qu'une partie au moins du couple de freinage est repris directement par le support fixe ne peut convenir à la liaison éléments de friction-support de couple car les surfaces en regard sont limitées et la totalité du couple de freinage passe par ces surfaces. La surface en appui sur le support fixe recevrait des chocs importants lors de marche arrière susceptibles d'endommager celle-ci et de dégrader considérablement la qualité du coulissement des éléments de friction, coulissement essentiel au bon fonctionnement de frein.

L'invention propose un frein à disque du type décrit ci-dessus dans lequel un élément unique assure l'immobilisation de la clavette et la fonction de ressort anti-bruit pour les organes de friction en éliminant le risque de dégrader la qualité du coulissement des éléments de friction au cours de la vie du frein.

L'invention propose un frein a disque du type décrit comme suit dans lequel un élément unique assure l'immobilisation de la clavette et une fonction de ressort anti-bruit pour les organes de friction.

Dans ce but, l'invention propose un frein à disque comprenant un organe support de couple auquel sont associés des moyens de commande susceptibles de solliciter au moins un organe de friction contre un disque de frein, ledit organe de friction coopérant avec les bords circonférentiellement espacés d'un ouverture ménagée dans l'organe support de couple par l'intermédiaire d'au moins une clavette de guidage permettant d'éviter l'échappement radial dudit organe de friction, et des moyens d'immobilisation en translation de ladite clavette coopérant avec ledit organe support de couple afin de maintenir la clavette dans sa position normale de fonctionnement lesdits moyens d'immobilisation comprenant deux bras coopérant avec des moyens de butée correspondants associés à l'organe de support de couple caractérisé en ce que, lesdits deux bras étant reliés par un élément de liaison muni de moyens formant ressort prenant appui sur une surface formée en vis-à-vis sur l'organe support de couple sollicitent ladite clavette vers ledit organe de friction et en éloignement de ladite surface formée sur l'organe support de couple au moyen de deux trous formés dans la clavette traversés par lesdits deux bras.

Conformément à un autre aspect de l'invention, des moyens de verrouillage sont prévus sur les moyens d'immobilisation pour maintenir ces derniers en position lorsque la clavette occupe sa position normale de fonctionnement.

On décrira maintenant à titre d'exemple un mode de réalisation particulier de l'invention en se référant aux dessins annexés dans lesquels:

— la figure 1 est une vue de dessus d'un frein à disque réalisé conformément aux enseignements de la présente invention;
— la figure 2 est une vue en coupe selon la ligne 2—2 de la figure 1;
— la figure 3 est une vue en section partielle selon la ligne 3—3 de la figure 1;
— la figure 4 est une vue identique à celle de la figure 3 montrant la première phase du montage de l'élément d'immobilisation représenté à la figure 3; et
— la figure 5 est une vue identique à la figure 3 montant la dernière phase du montage de l'élément d'immobilisation représenté à la figure 3.

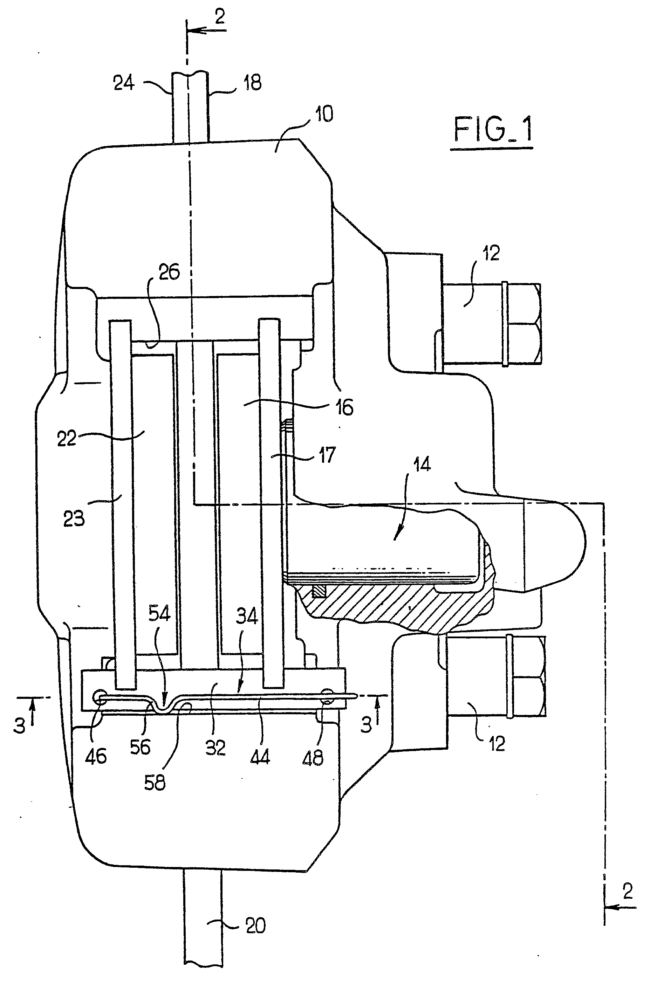

Le frein à disque représenté sur la figure 1 comprend un cadre ou étrier mobile 10 monté coulissant par exemple au moyen de deux colonnettes 12 sur un organe support fixe (non représenté). Des moyens de commande, constitués par un moteur de frein hydraulique 14 dans le mode de réalisation représenté, sont associés à l'étrier 10 et disposés de façon à solliciter directement un organe de friction 16 comportant une plaque support 17, contre une première face 18 d'un disque de frein 20 associé à une roue du véhicule (non représentée). Par réaction, alors de la mise en oeuvre du moteur de frein 14, l'étrier 10 sollicite un second organe de friction 22 comportant une plaque support 23, contre la seconde face 24 du disque 20.

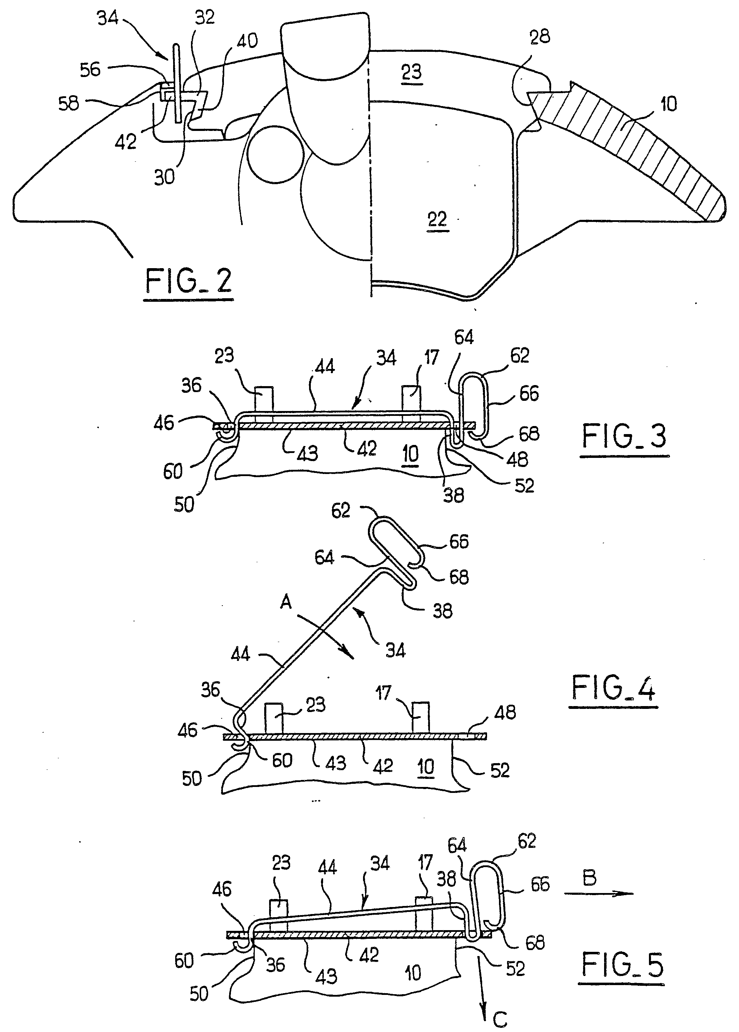

Comme le montrent en particulier les figures 1 et 2, l'étrier 10 est muni dans sa partie chevauchant le disque 20 d'une ouverture radiale sensiblement rectangulaire 26 dont les bords circonférentiellement espacés 28 et 30 supportent les organes de friction 16 et 22, de telle sorte que l'étrier 10 constitue pour ces derniers un organe support de couple. En outre une clavette de guidage 32 est disposée entre les organes de friction 16 et 22 et le bord 30 de l'ouverture 26. On remarquera, comme le montre clairement la figure 2, que les dimensions respectives des organes de friction 16 et 22 et de la clavette 32, ainsi que la distance définie entre les bords 28 et 30 sont tels que les organes de friction 16 et 22 peuvent être extraits radialement au travers de l'ouverture 26 lorsque la clavette 32 n'est pas dans sa position normale de fonctionnement représentée sur les figures 1 et 2.

Comme le montre en particulier la figure 2, la clavette 32 présente en section sensiblement la forme d'un V dont les faces internes coopèrent avec le bord 30 de l'ouverture 26 et dont les faces externes reçoivent en coulissement les plaques support 17 et 23 des organes de friction 16 et 22. L'une 40 des branches de la clavette en V 32 s'étend vers l'intérieur du frein alors que l'autre branche 42 est sensiblement perpendiculaire à un plan radial de symétrie du frein passant par l'axe du disque 20 et par l'axe du moteur de frein hydraulique 14. En outre, les deux branches 40 et 42 de la clavette 32 définissent un angle aigu, et les organes de friction 16 et 22 sont de préférence sensiblement symétriques par rapport au plan de symétrie du frein défini précédemment, ce que signifie que le bord de l'ouverture 26 ainsi que les parties des plaques support 17 et 23 prenant ancrage sur ce bord sont également en forme de V et définissent un angle sensiblement égal à l'angle défini par les branches 40 et 42 de la clavette 32. Enfin, la clavette 32 est susceptible de coulisser le long du bord 30 de l'ouverture 26 dans une direction sensiblement parallèle à l'axe du disque 20 lorsque les moyens d'immobilisation 34 de la clavette 32 sont démontés.

Conformément à l'invention, les moyens d'immobilisation 34 sont constitués par un élément unique réalisé dans un matériau élastique formant ressort anti-bruit d'une façon qui sera déceité plus avant.

Comme le montre en particulier la figure 3, l'élément d'immobilisation 34 comprend un premier bras 36 et un second bras 38 reliés par un élément de liaison 44. Les bras 36 et 38 s'étendent depuis l'élément de liaison 44 au travers de trous 46 et 48 formés dans la face plane définie par la branche 42 de la clavette 32. Les bras 36 et 38 s'étendent dans une direction sensiblement perpendiculaire à la branche 42 pour venir coopérer avec les bords externes 50 et 52 (respectivement) de l'étrier 10. Les bords 50 et 52 constituent des moyens formant butée qui coopérant avec les bras 36 et 38 de l'élément 34 afin d'immobiliser la clavette 32 en translation axiale par rapport à l'étrier formant organe support de couple 10, lorsque l'élément 34 occupe sa position normale de fonctionnement telle que représentée aux figures 1, 2 et 3.

Conformément à l'invention et comme le montrent en particulier les figures 1 et 2, des moyens 54 formant ressort anti-bruit pour les organes de friction 16 et 22 sont prévus sur l'élément d'immobilisation 34. Les moyens formant ressort 54 sont constitués par un prolongement 56 s'étendant depuis l'élément de liaison 44 dans un plan sensiblement parallèle à la branche 42 de la clavette 32. Le prolongement 56 coopère avec une surface 58 formée en vis-à-vis sur l'étrier 10 et s'étendant dans un plan sensiblement perpendiculaire à la branche 42 de la clavette. Lorsque l'élément d'immobilisation 34 occupe sa position normale de fonctionnement, le prolongement 56 est comprimé de façon à solliciter la clavette 32 en éloignement du bord 58 de l'étrier 10 dans une direction sensiblement parallèle à la branche 42. On comprend qu'ainsi les plaques support 17 et 23 des organes de friction 18 et 22 sont sollicitées élastiquement en appui sur le bord 28 de l'ouverture rectangulaire 26 de l'étrier 10. Grâce à ce montage l'élément 34 fait fonction de ressort anti-bruit pour les organes de friction 16 et 22 en évitant toutes les fibrations nuisibles de ces derniers.

Conformément à un autre aspect de l'invention, des moyens de verrouillage sont prévus sur l'élément 34 afin de verrouiller ce dernier dans sa position normale de fonctionnement représentée à la figure 3. Les moyens de verrouillage comprennent un premier crochet 60 formé à l'extrémité libre du premier bras 36 et qui coopère avec la face inférieure 43 de la branche 42 de la clavette 32; les moyens de verrouillage comprennent également une boucle 62 ayant sensiblement la forme d'un U renversé. Une première branche 64 du U s'étend depuis l'extrémité libre du bras 38 et parallèlement à ce dernier au travers du trou 58 formé dans la branche 42 de la clavette 32. La deuxième branche 66 du U est munie à son extrémité libre d'un deuxième crochet 68 qui coopère de manière élastique avec la face inférieure 43 de la branche 42 lorsque l'élément de liaison occupe sa position normale de fonctionnement.

Le montage des organes de friction 16 et 18 dans l'ensemble du frein s'effectue de la manière suivante:

On introduit les patins radialement dans l'ouverture 26 formée dans l'étrier 10. On introduit ensuite la clavette 32 en la faisant coulisser axialement entre le bord 30 et les parties en vis-à-vis des plaques support 17 et 23 des organes de friction afin d'empêcher l'échappement radial des ces derniers. On réalise alors le montage de l'élément d'immobilisation 34 comme il est représenté aux figures 4 et 5. Après avoir introduit le crochet 60 et le bras 36 dans le trou 46 on fait pivoter l'élément 34 dans la direction indiquée par la flèche A de façon à amener l'élément 34 dans la position qu'il occupe à la figure 4. On tire ensuite sur la branche 66 de la boucle en U 62 dans la direction indiquée par la flèche B de façon à dégager le crochet 68 de la face supérieure de la branche 42 de la clavette afin de permettre l'introduction du bras 38 et de la branche 64 dans le trou 48 suivant la flèche C. Il ne reste plus alors qu'à relâcher le crochet 68 afin que ce dernier vienne occuper la position représentée à la figure 3, position dans laquelle la clavette 32 et l'élément 34 sont immobilisés et coopérant à l'aide du prolongement 56 pour solliciter élastiquement la clavette 32 et les organes de friction 16 et 22.

On comprend que l'invention n'est pas limitée à un frein du type décrit et peut également s'appliquer à un frein du type dit à étrier fixe dans lequel l'étrier est directement associé à une partie fixe du véhicule et comporte des moyens de commande opposés agissant directement sur chacun des organes de friction, ainsi qu'à un frein à disque du type à étrier ou du à cadre coulissant dans lequel les organes de friction seraient montés dans une ouverture formée dans une partie fixe du véhicule portant ledit étrier.

**Revendications**

1. Frein à disque comprenant un organe support de couple (10) auquel sont associés des moyens de commande (14) susceptibles de solliciter au moins un organe de friction (16, 22) contre un disque de frein (20), ledit organe de friction (16, 22) coopérant avec les bords circonférentiellement espacés (28, 30) d'une ouverture (26) ménagée dans l'organe support de couple (10) par l'intermédiaire d'au moins une clavette de guidage (32) permettant d'éviter l'échappement radial dudit organe de friction, et des moyens d'immobilisation en translation (34) de ladite clavette (32) coopérant avec ledit organe support de couple (10) afin de maintenir la clavette (32) dans sa position normale de fonctionnement, lesdits moyens d'immobilisation comprenant deux bras (36, 38) coopérant avec des moyens de butée correspondants (50, 52) associés à l'organe support de couple (10) caractérisé en ce que lesdits deux bras (36, 38) étant reliés par un élément de liaison (44) muni de moyen (54) formant ressort prenant appui sur une surface (58) formée en vis à vis sur l'organe support de couple sollicitent ladite clavette (32) vers ledit organe de friction (16, 22) et en éloignement de ladite surface (58) formée sur l'organe de support de couple (10) au moyen de deux trous (46, 48) formés dans la clavette (32) traversés par lesdits deux bras (36, 38).

2. Frein à disque selon la revendication 1, caractérisé en ce que lesdits moyens d'immobilisation (34) comportent des moyens de verrouillage (60, 62) pour maintenir lesdits moyens d'immobilisation (34) en position lorsque ladite clavette (32) occupe sa position normale de fonctionnement.

3. Frein à disque selon la revendication 1 ou 2, dans lequel ladite clavette (32) est susceptible de coulisser le long du bord correspondant (30) de ladite ouverture (26) dans une direction sensiblement parallèle à l'axe du disque au moyen d'une face plane (42) sensiblement perpendiculaire à un plan radial de symétrie du frein, caractérisé en ce que lesdits bras (36, 38) dudit élément d'immobilisation (34) s'étendent depuis ledit élément de liaison (34) au travers de ladite face plane (42) et dans une direction sensiblement perpendiculaire à cette dernière.

4. Frein à disque selon la revendication 3 caractérisé en ce que, d'une façon connue en soi, lesdits moyens (54) formant ressort sont constitués par un prolongement (56) dudit élément de liaison (44) et en ce que ledit prolongement (56) s'étend depuis ledit élément de liaison (44) dans un plan sensiblement parallèle à ladite face (42) de la clavette pour venir prendre appui élastiquement sur ladite surface (58) formée en vis-à-vis sur l'organe support, cette dernière s'étendant dans un plan sensiblement perpendiculaire à ladite face de la clavette (42).

5. Frein à disque selon l'une des revendications 3 ou 4 prise en combinaison avec la revendication 2, caractérisé en ce que lesdits moyens de verrouillage comprennent un premier crochet formé (60) à l'extrémité libre d'un premier (36) desdits deux bras et susceptible de coopérer avec une face (43) de la clavette lorsque ledit bras (36) est introduit dans le trou correspondant (46) formé dans la clavette et une boucle (62) ayant sensiblement la forme d'un U renversé dont une première branche (64) s'étend depuis l'extrémité libre du second (38) desdits deux bras et parallèlement à ce dernier au travers du trou correspondant (48) formé dans pa clavette (32), et dont la deuxième branche (66) est munie à son extrémité libre d'un second crochet (68) susceptible de coopérer avec ladite face (43) de la clavette afin d'assurer le verrouillage de l'élément d'immobilisation (34) lorsque de dernier occupe sa position normale de fonctionnement.

### Patentansprüche

1. Scheibenbremse mit einem Bremssattel (10), dem Betätigungsmittel (14) zugeordnet sind, durch die mindestens ein Reibelement (16, 22) gegen eine Bremsscheibe (20) andrückbar ist, wobei das Reibelement (16, 22) mit den beabstandeten Umfangsrändern (28, 30) einer Öffnung (26) im Bremssattel (10) über mindestens einen Führungskeil (32) zusammenwirkt, der ein radiales Entweichen des Reibelementes verhindert, und Fixiermitteln (34) zum Festlegen des Führungskeiles (32) in Translationsrichtung, die mit dem Bremssattel (10) zusammenwirken, um den Führungskeil (32) in seiner normalen Betriebsstellung zu halten, wobei die Fixiermittel zwei Arme (36, 38) aufweisen, die mit entsprechenden Anschlägen (50, 52) des Bremssattels (10) zusammenwirken, dadurch gekennzeichnet, daß die beiden Arme (36, 38) mit einem Verbindungselement (44) verbunden sind, das mit einem Federteil (54) versehen ist, das an einer Anlagefläche (58) anliegt, die gegenüber am Bremssattel gebildet ist, derart, daß die beiden Arme den Führungskeil (32) gegen das Reibelement (16, 22) und weg von der Anlagefläche (58) vorspannen, und zwar mittels zweier in dem Führungskeil (32) gebildeter Löcher (46, 48), die von den beiden Armen (36, 38) durchquert werden.

2. Scheibenbremse nach Anspruch 1, dadurch gekennzeichnet, daß die Fixiermittel (34) Verriegelungsmittel (60, 62) aufweisen, die die Fixiermittel (34) in ihrer Lage halten, wenn der Führungskeil (32) seine normale Betriebsstellung einnimmt.

3. Scheibenbremse nach Anspruch 1 oder 2, bei der der Führungskeil (32) entlang des entsprechenden Randes (30) der Öffnung (26) in einer im wesentlichen zur Scheibenachse parallelen Richtung gleitbar ist, und zwar mittels einer ebenen Fläche (42), die auf einer radialen Symmetrieebene der Bremse im wesentlichen senkrecht steht, dadurch gekennzeichnet, daß die Arme (36, 38) der Fixiermittel (34) sich von dem Verbindungselement (34) durch die besagte ebene Fläche (42) und in einer im wesentlichen auf dieser senkrecht stehenden Richtung erstrecken.

4. Scheibenbremse nach Anspruch 3, dadurch gekennzeichnet, daß in an sich bekannter Weise das Federteil (54) von einer Verlängerung (56) des Verbindungselementes (44) gebildet wird und daß die Verlängerung (56) sich von dem Verbindungselement (44) aus in einer Ebene erstreckt, die im wesentlichen parallel zu der besagten Fläche (42) des Führungskeiles verläuft, damit sie an der Anlagefläche (58) des Bremssattels elastisch anliegt, wobei sich die letztere in einer Ebene erstreckt, die im wesentlichen auf der besagten Fläche des Führungskeiles (42) senkrecht steht.

5. Scheibenbremse nach Anspruch 3 oder 4 in Verbindung mit Anspruch 2, dadurch gekennzeichnet, daß die Verriegelungsmittel aufweisen: einen ersten Haken (60), der am freien Ende eines ersten (36) Armes der beiden Arme gebildet ist und mit einer Fläche (43) des Führungskeiles zusammenwirkt, wenn dieser Arm (36) in das entsprechende Loch (46) des Führungskeiles eingeführt ist, sowie eine Schlinge (62), die im wesentlichen die Form eines umgekehrten U hat, wobei ein erster Schenkel (64) des U sich von dem freien Ende des zweiten Armes (38) aus parallel zu diesem durch das entsprechende Loch (48) im Führungskeil (32) erstreckt und der zweite Schenkel (66) des U an seinem freien Ende mit einem zweiten Haken (68) versehen ist, der mit der besagten Fläche (43) des Führungskeiles zusammenwirkt, um die Verriegelung des Fixierelementes (34) sicherzustellen, wenn das letztere seine normale Betriebsstellung einnimmt.

### Claims

1. A disk brake comprising a torque support member (10) having actuating means (14) associated therewith, which actuating means are adapted to urge at least one friction member (16, 22) against a brake disk (20), said friction member (16, 22) cooperating with the spaced circumferential edges (28, 30) of an opening (26) formed in the torque support member (10) by means of at least one guide member (32) permitting to prevent radial escape of the friction member, and means (34) for translationally immobilizing said guide member (32) cooperating with said torque support member (10) to maintain the guide member (32) in its normal position of operation, said immobilisation means comprising a pair of arms (36, 38) cooperating with corresponding abutment means (50, 52) associated to the torque support member (10), characterized in that said arms (36, 38) connected by a connecting element (44) provided with a means (54) forming a spring supported against a surface (58) formed opposite thereto upon the torque support member, urge said guide member (32) against said friction member (26, 22) and away from said surface (58) formed upon the torque support member (10) by means of a pair of holes (46, 48) formed in the guide member (32) and traversed by said arms (36, 38).

2. The disk brake of claim 1, characterized in that said immobilisation means (34) comprise locking means (60, 62) for maintaining said immobilisation means (34) in their position if said guide member (32) is in its normal position of operation.

3. The disk brake of claim 1 and 2, in which said guide member (32) is adapted to slide along the corresponding edge (60) of said opening (26) in a direction substantially parallel to the axis of the disk by means of a plane face (42) substantially perpendicular to a radial plane of symmetry of the brake, characterized in that said arms (36, 38) of the immobilisation element (34) extend from said connecting element transversely to said plane face (42) and in a direction substantially perpendicularly to the latter.

4. The disk brake of claim 3, characterized in that in a manner known per se, said means (54) forming a spring are comprised by an elongation (56) of said connecting element (44), and in that said elongation (56) extends from said connecting element (44) in a plane substantially parallel to said face (42) of the guide member for being resiliently urged against said surface (58) formed opposite thereto upon the torque support member, said latter extending in a plane substantially perpendicular to said face of the guide member (42).

5. The disk brake of claim 3 or claim 4 in connection with claim 2, characterized in that said locking means comprise a first hook (60) formed at the free end of a first (36) of said two arms and adapted to cooperate with a face (43) of the guide member if said arm (36) is introduced into the corresponding hole (46) formed in the guide member, and a sling (62) substantially U-shaped, one leg (64) of the U extending from the free end of the second (38) of said arms and parallel to the latter transversely to the corresponding hole (48) formed in the guide member (32) and the second leg (66) of the U being provided at its free end with a second hook (68) adapted to cooperate with said face (43) of the guide member in order to assure the locking of the immobilisation element (34) if the latter is in its normal position of operation.

FIG_1

**0030184**

FIG_2

FIG_3

FIG_4

FIG_5

2